# EUROPÄISCHE PATENTSCHRIFT

(11) **EP 0 522 497 B1**
(45) Veröffentlichungstag und Bekanntmachung des Hinweises auf die Patenterteilung: **02.01.1997**
(21) Anmeldenummer: 92111487.2
(22) Anmeldetag: 07.07.1992
(51) Int. Cl.: A01J 5/08, A01J 5/04

(54) **Abschluss für eine Milchleitung**
Seal valve for a milk line
Fermeture pour une conduite de lait

(30) Priorität: 10.07.1991 DE 4122852
(43) Veröffentlichungstag der Anmeldung: 13.01.1993
(73) Patentinhaber: Happel, Fritz, D-87650 Baisweil (DE)
(72) Erfinder: Happel, Fritz, D-87650 Baisweil (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- WO-A-84/01088
- DE-B- 1 296 867
- FR-A- 2 149 598
- GB-A- 2 192 525
- US-A- 2 986 117

## Beschreibung

Die Erfindung betrifft einen Abschluß für eine an Vakuum liegende Milchleitung, insbesondere im Bereich unterhalb der Zitze angeordnet.

Der Abschluß hat die Aufgabe, während des Massagetaktes beim Kollabieren des Zitzengummis die Zitze vom Vakuum zu trennen und somit vom Vakuum zu entlasten. Es sind Vorrichtungen dieser Art bekannt, z. B. ein Klemmstück mit einem quer zur Melkbecherachse liegenden Spreizflansch in der annähernden Form einer 8, wobei die äußereren, tropfenförmigen Verdickungen die sich bildenden Randräume beim kollabierenden Zitzengummi ausfüllen, damit ein Vakuumunterbruch möglich wird. Eine dünne Zitzengummi-Wandung im Bereich des Abschlusses ermöglicht ein erwünscht frühzeitiges Abschließen vor dem Kollabieren des Zitzengummis.

Die bekannten Abschlußventile haben einen schwerwiegenden Nachteil: Ist der abgeschlossene Raum, vom Abschluß zur Zitze hin, bei Milchfluß ganz oder teilweise mit Milch gefüllt, hat dies die Folge, daß die Zitze bei Milchfluß im Massagetakt unzureichend massiert wird, da durch die Volumenfüllung mit Flüssigkeit ein Kollabieren des Zitzengummis beeinträchtigt wird, weil kein ausreichender Differenzdruck nach Unterbruch der Vakuumverbindung vorhanden ist.

Ein weiterer Nachteil ist, daß ein derartiger Abschluß nicht bei einem Melkverfahren verwendet werden kann, bei dem auf die äußere Zitzenschlauch-Wandung im Bereich des abgeschlossenen Raumes ein höherer Druck als der Druck im Zitzenschlauchinnenraum benutzt werden kann, da dies Zu einem unerwünschten Überdruck in dem abgeschlossenen Zitzenschlauchinnenraum und somit auf die Zitze führt, der ein Abfallen des Melkbechers bewirken würde.

Diese Nachteile werden durch die erfindungsgemäße Ausbildung eines derartigen Abschlusses vermieden. Eine bevorzugte Lösung der gestellten Aufgabe verwendet einen auf Druckdifferenzen reagierenden Abschluß, der sicherstellt, daß in der Massage bzw. Entlastungsphase unabhängig vom Vorhandensein einer Milchmenge im abgeschlossenen Raum zur Zitze hin ein Vakuum im Bereich von -5 bis -15 kPa aufrechterhalten wird. Der Abschluß stellt sicher, daß sowohl die Zitze entlastet als auch massiert werden kann.

Aus der US-A-2 986 117 ist ein Melkbecher bekannt, bei dem unterhalb des im Melkbecher eingespannten Zitzengummis ein in Richtung des Zitzengummis durch eine Feder vorgespanntes Ventilelement angeordnet ist. Dieses Ventilelement dient dazu, bei einem Abfall des Melkbechers die Verbindung des Zitzengummiinnenraums zur Vakuumquelle abzuschließen und damit ein Einsaugen von Luft zu verhindern.

Aus der GB-A-2 192 525 ist ein Melkbecher mit einem Abschluß bekannt, der während der Massagephase unabhängig von dem im Raum unterhalb der Zitze auftretenden Druck diesen Raum unterhalb der Zitze von, der Vakuumquelle trennt. Ein unterhalb dieses Abschlusses angeordnetes Ventilelement dient dazu, starke Druckanstiege im Inneren des Melkbechers während der Saugphase zu verhindern. Auswirkungen auf die Massagephase hat dieses Ventil nicht.

Aufgabe der Erfindung ist es, die vorstehend angegebenen Nachteile zu vermeiden und einen Abschluß zu schaffen, der zu einer guten Massage der Zitze während des Massagetaktes führt und der Gefahr des Abfallens des Melkbechers entgegenwirkt.

Gelöst wird diese Aufgabe nach der Erfindung dadurch, daß der Abschluß als auf in der Massagephase auftretende Druckdifferenzen ansprechender Abschluß zwischen dem Raum unterhalb der Zitze und der Milchleitung mit einer Ventilfunktion ausgebildet ist, die den Abschluß zur Verhinderung der Ausbildung eines Überdrucks in dem Raum unterhalb der Zitze überbrückt und eine Vakuumhöhe im Bereich von etwa -5 bis -15 kPa aufrechterhält.

Durch diese Maßnahmen wird sichergestellt, daß die jeweilige Zitze sowohl vom Unterdruck entlastet als auch in der erforderlichen Weise massiert werden kann.

Bevorzugt wird in oder an dem Abschluß ein Druckregelventil angeordnet oder mit dem Abschluß gekoppelt, das differenzdruckabhängig arbeitet und in einem bestimmten Bereich nahe der Atmosphäre einstellbar ist.

Dieses Druckregelventil überbrückt bei vorgebbaren Differenzdrücken den Abschluß zwischen dem Raum unterhalb der Zitze und dem auf der anderen Seite des Abschlusses anliegenden Vakuum. Auf diese Weise wird ein Auftreten von Überdruck in dem Raum unterhalb der Zitze bei Volumenverminderung dieses Raumes, insbesondere bei teilweiser oder vollständiger Füllung mit Flüssigkeit vermieden.

Weiterhin bietet sich durch die Erfindung die Möglichkeit, daß mittels einer Fremdkraft der Massagedruck auf die Zitzenwandung von außen erhöht wird und so trotz Vakuumabbau im Innenraum an der Zitze bis nahe der Atmosphäre eine kräftige Massage der Zitze erreicht werden kann. Dieser Abschluß kann ebenso unterhalb des Melkbechers angeordnet sein und, falls konstruktionsbedingt, mit einem besonderen Gehäuse umgeben werden. Auch kann dieser Abschluß sich z. B. im Sammelstück eines Melkzeuges befinden, wobei dem Abschluß bei Simultan-Steuerung vier Melkbecher, oder bei Wechseltakt-Steuerung zwei Melkbecher, zugeordnet sein können.

Dieser erfindungsgemäße Abschluß kann auch in bekannter Weise zusätzlich mit einer Lufteinströmdüse in den Raum 12 ausgestattet bzw. mit dieser kombiniert werden, um einen noch besseren Abzug der Milch von der Zitze zu erreichen.

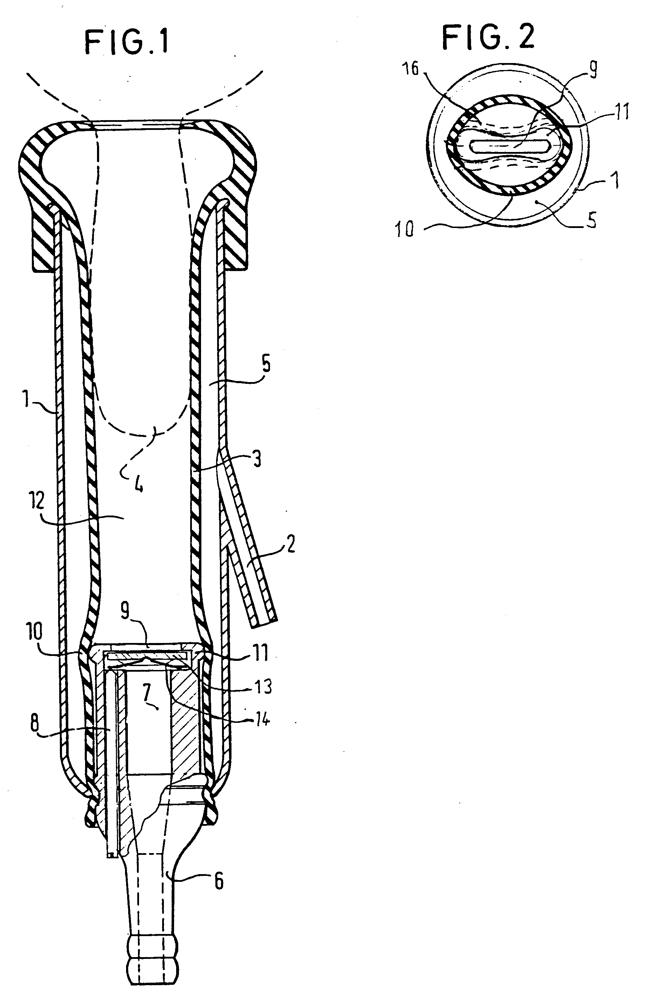

Eine Ausführungsform des erfindungsgemäßen Abschlusses ist in einem konventionellen Zweiraum-Melkbecher in Figur 1 dargestellt und Figur 2 zeigt einen Schnitt dieser Ausführungsform in Draufsicht. Der Abschlußsteg 11 ist auf einem Klemmstück angebracht, das gleichzeitig das Schauglas 6 darstellt. In der Zitzenbecherhülse 1 ist der Zitzenschlauch 3 oben und unten luftdicht eingespannt, dadurch entsteht der Ringraum 5. Ist die Zitze 4 eingeführt und herrscht in dem Ringraum 5 und im Innenraum 12 Vakuum, so ist der Zitzenschlauch geöffnet (Saugtakt):
Der Raum 7 unterhalb des Abschlußsteges ist über dem Milchschlauch ständig mit dem Vakuum verbunden. Der Zitzenschlauch 3 ist bei 10 in seinem Umfang über den Abschlußsteg leicht vorgespannt. Wird nun über die Verbindung 2 in den Ringraum 5 Atmosphäre eingeleitet, so kollabiert der Zitzengummi und legt sich an den Abschlußsteg an und schließt so das Vakuum zwischen Raum 7 und Raum 12 unterhalb der Zitze ab. Das verbleibende Restvakuum in Raum 12 wird durch Kollabieren des Zitzengummis und der damit verbundenen Volumenverminderung abgesenkt (Massagetakt).

Ist der Raum 12 während dieses sogenannten Massagetaktes weitgehend mit Milch gefüllt, so wäre eine entsprechende Volumenverminderung nicht möglich, aber durch das vorhandene Druckregelventil mit der Dichtplatte 13 ist eine solche Volumenverminderung des Raumes 12 durchführbar, da die in Raum 12 vorhandene Flüssigkeit bei einem vorbestimmten, einstellbaren Differenzdruck durch den Abschluß über den Kanal 9 übertreten kann.

Wird nach dem Massagetakt über die Verbindung 2 wieder in den Raum 5 Vakuum eingeleitet, so wird der kollabierte Zitzengummi geöffnet und damit vom Abschlußsteg gelöst, so daß in Raum 12 wieder Vakuum herrscht.

Das Druckregelventil ist bei diesem Ausführungsbeispiel mittels der Schraube 8 über eine Feder 14 einstellbar. Ein Druckregelventil ähnlicher Art kann auch über die Zitzeneinführungsöffnung einstellbar sein.

Figur 2 zeigt diese Ausführungsvariante im Schnitt in der Draufsicht. Die gestrichelte Linie 16 zeigt den Zitzenschlauch bei 10 in Anlage an den Abschlußsteg 11 (Massagetakt), d. h. in der Position, in der Raum 12 unterhalb der Zitze 4 vom Vakuumraum 7 getrennt ist und diese Trennung differenzdruckabhängig über das Druckregelventil überbrückt werden kann. Das Druckregelventil sorgt bevorzugt dafür, daß im Raum 12 ein Vakuum im Bereich von etwa -5 bis -15 kPa aufrechterhalten wird.

Das Druckregelventil kann - auch in Abhängigkeit von seinem Anbringungsort - konstruktiv unterschiedlich ausgebildet sein, aber es muß stets gewährleisten, daß es bei einem vorgebbaren Differenzdruck automatisch öffnet.

## Patentansprüche

1. Abschluß für eine an Vakuum liegende Milchleitung, insbesondere im Bereich unterhalb der Zitze angeordnet,
dadurch **gekennzeichnet,**
daß der Abschluß als auf in der Massagephase auftretende Druckdifferenzen ansprechender Abschluß zwischen dem Raum unterhalb der Zitze und der Milchleitung mit einer Ventilfunktion ausgebildet ist, die den Abschluß zur Verhinderung der Ausbildung eines Überdrucks in dem Raum unterhalb der Zitze überbrückt und eine Vakuumhöhe im Bereich von etwa -5 bis -15 kPa aufrechterhält.

2. Abschluß nach Anspruch 1,
dadurch **gekennzeichnet,**
daß dem Abschluß ein Druckregelventil (13, 14) zugeordnet ist.

3. Abschluß nach Anspruch 2,
dadurch **gekennzeichnet,**
daß das Druckregelventil (13, 14) einstellbar ist.

4. Abschluß nach Anspruch 2 und 3,
dadurch **gekennzeichnet,**
daß das Druckregelventil (13, 14) von außen einstellbar ist.

5. Abschluß nach einem der vorhergehenden Ansprüche,
dadurch **gekennzeichnet,**
daß der Abschluß und ggf. das zugehörige Druckregelventil (13, 14) in dem Zitzenschlauch (10) eines Melkbechers (1) angeordnet sind.

6. Abschluß nach den Ansprüchen 2, 3 oder 4,
dadurch **gekennzeichnet,**
daß der Anschluß und das ggf. zugehörige Druckregelventil (13, 14) sich im Sammelstück eines Melkzeuges befinden.

## Claims

1. Termination for a milk line to which a vacuum is applied, in particular a termination arranged in the region beneath the teat, characterised in that the termination is formed as a closure between the space beneath the teat and the milk line, with the closure responding to pressure differences occurring in the massage phase with a valve function which bridges the closure to prevent the formation of an overpressure in the space beneath the teat and maintains a vacuum level in the region of approximately -5 to -15 kPa.

2. Termination in accordance with claim 1, characterised in that a pressure regulating valve (13, 14) is associated with the closure.

3. Termination in accordance with claim 2, characterised in that the pressure regulating valve (13, 14) is adjustable.

4. Termination in accordance with claim 2 and claim 3, characterised in that the pressure regulating valve (13, 14) is adjustable from the outside.

5. Termination in accordance with one of the preceding claims, characterised in that the closure and the pressure regulating valve (13, 14) associated optionally therewith are arranged in the teat hose (10) of a milking cup (1).

6. Termination in accordance with one of the claims, 2, 3 or 4, characterised in that the closure and the pressure regulating valve (13, 14) optionally associated therewith are located in the collecting piece of a milking claw.

## Revendications

1. Fermeture pour une conduite à lait sous vide, en particulier agencée dans la région au-dessous du trayon, caractérisée en ce que la fermeture est réalisée sous forme d'une fermeture qui réagit aux différences de pression qui se produisent pendant la phase de massage entre l'espace au-dessous du trayon et la conduite à lait, avec une fonction de soupape qui effectue un pontage de la fermeture pour empêcher l'apparition d'une surpression dans l'espace au-dessous du trayon et qui maintient un niveau de vide dans la plage depuis environ -5 jusqu'à -15 kPa.

2. Fermeture selon la revendication 1, caractérisée en ce qu'une soupape de régulation de pression (13, 14) est associée à la fermeture.

3. Fermeture selon la revendication 2, caractérisée en ce que la soupape de régulation de pression (13, 14) est réglable.

4. Fermeture selon les revendications 2 et 3, caractérisée en ce que la soupape de régulation de pression (13, 14) est réglable depuis l'extérieur.

5. Fermeture selon l'une des revendications précédentes, caractérisée en ce que fermeture, et le cas échéant la soupape associée de régulation de pression (13, 14) sont agencées dans le tuyau de trayon (10) d'un godet de trayage (1).

6. Fermeture selon l'une des revendications 2,3 et 4, caractérisée en ce que la fermeture et le cas échéant la soupape de régulation de pression associée (13, 14) sont situées dans une pièce collectrice d'un appareil de trayage.
